# EUROPEAN PATENT SPECIFICATION

(11) **EP 4 351 369 B1**
(45) Date of publication and mention of the grant of the patent: **25.11.2026**
(21) Application number: 23833556.6
(22) Date of filing: 08.08.2023
(51) Int. Cl.: B29C 65/48, B29C 59/14, B29K 23/00, A24F 40/70, B29C 65/52, B29C 65/08, B29C 65/72, B29L 31/34, B29L 31/00, A24F 40/10, A24F 40/42

(54) **METHOD OF MANUFACTURING A CARTRIDGE**
VERFAHREN ZUR HERSTELLUNG EINER KARTUSCHE
PROCÉDÉ DE FABRICATION D'UNE CARTOUCHE

(30) Priority: 08.08.2022 KR 20220098782; 25.11.2022 KR 20220160674
(43) Date of publication of application: 17.04.2024
(73) Proprietor: KT&G Corporation, Daedeok-gu Daejeon 34337 (KR)
(72) Inventor: YOON, Sung Wook, Suwon-si, Gyeonggi-do 16534 (KR); KIM, Tae Hun, Yongin-si, Gyeonggi-do 16925 (KR); PARK, Ju Eon, Seongnam-si, Gyeonggi-do 13597 (KR); JUNG, Hyung Jin, Seoul 06993 (KR); HAN, Jung Ho, Daejeon 34021 (KR)
(74) Representative: Ter Meer und Partner mbB
(86) International application number: PCT/KR2023/011639
(87) International publication number: WO 2024/035050

(56) References cited:
- EP-A1- 3 818 871
- WO-A1-2021/123017
- KR-A- 20210 098 481
- US-A1- 2011 226 236
- US-A1- 2016 353 802
- US-A1- 2017 164 657
- US-A1- 2017 246 794
- US-A1- 2020 093 178

## Description

### Technical Field

One or more embodiments relate to a method of manufacturing a cartridge, a cartridge manufactured according to the method, and an aerosol generating device including the cartridge. More particularly, one or more embodiments relate to a method of manufacturing a cartridge with improved sealing for accommodating therein an aerosol generating material.

### Background Art

Recently, the demand for alternative methods for overcoming the shortcomings of general cigarettes has increased. For example, there is an increasing demand for a system for generating aerosols by heating a cigarette or an aerosol generating material by using an aerosol generating device, rather than by burning cigarettes. Accordingly, research on a heated aerosol generating device has been actively conducted.

An aerosol generating device that generates an aerosol by heating a liquid aerosol generating material may include a cartridge containing the liquid aerosol generating material. The cartridge may be integrally formed with a main body of the aerosol generating device or detachably coupled thereto. US 2017/246794 A1 relates to a method for making a gas-tight container in elastomeric material comprising: providing two or more separate elastomeric portions, cleaning and/or roughening the gluing surfaces of the gluing edges, applying an adhesive onto the previously cleaned, degreased and/or roughened gluing surfaces, assembling the portions to form the container and inserting between the gluing surfaces a raw elastomeric tape not yet cured, applying a cold pressure on the overlapped gluing edges, heating the overlapped gluing edges to thermally activate the curing of the raw tape, cooling the gluing areas. EP 3 818 871 A1 relates to an aerosol generating apparatus including a main body; a cartridge detachably coupled to the main body, comprising an air inlet hole through which external air is introduced, and configured to store a liquid material and generate aerosol by heating the liquid material; a cigarette detachably coupled to the main body, comprising a solid material, and disposed on a path along which the aerosol generated in the cartridge flows such that the aerosol passes through the solid material and is discharged to outside; and a cover detachably coupled to the main body to cover the cartridge coupled to the main body and comprising: a cigarette hole through which the cigarette is coupled to the main body; and a ventilation hole formed at a position adjacent to the air inlet hole of the cartridge and configured to discharge the aerosol remaining in the cartridge to the outside or introduce the external air. US 2011/226236 A1 relates to an inhaler component for producing a steam/air mixture or/and condensation aerosol in an intermittent and inhalation- or pull-synchronous manner. Said inhaler component includes the following elements: a housing; a chamber arranged in said housing; an air inlet opening for the supply of air from the surroundings to the chamber; an electrical heating element for evaporating a portion of a liquid material, the steam produced mixing in the chamber with the air supplied through the air inlet opening, thereby producing the steam/air mixture or/and condensation aerosol; and a wick having a capillary structure, which wick forms a composite structure with the heating element and automatically supplies the heating element with fresh liquid material after evaporation. In order to provide the high specific evaporative capacity required for an intermittent, inhalation- or pull-synchronous operation of the inhaler component while guaranteeing a high efficiency of the evaporator, the composite structure is a flat structure and at least one heated section of the composite structure is arranged in the chamber in a contact-free manner, and the capillary structure of the wick is substantially exposed in said section on at least one side of the flat composite structure.

### Disclosure of Invention

### Technical Problem

A cartridge containing a liquid aerosol generating material needs to have good seal to prevent the liquid aerosol generating material from leaking. In addition, because a disposable cartridge detachably coupled to an aerosol generating device is discarded when an initial liquid aerosol generating material is exhausted, cost effectiveness of manufacturing the cartridge is required.

The technical problems of the disclosure are not limited to the aforementioned description, and other technical problems that are not stated herein may be clearly understood by one of ordinary skill in the art to which embodiments of the disclosure pertain, from the present specification and the attached drawings.

### Solution to Problem

A method of manufacturing a cartridge includes plasma-treating at least a portion of a region of a storage, applying an adhesive to the region of the storage that is plasma-treated, and sealing the storage by coupling a cover to the region to which the adhesive is applied.

The technical problems of the present disclosure are not limited to the aforementioned description and may include all matters that may be inferred by one of ordinary skill in the art from the specification.

### Advantageous Effects of Invention

According to a method of manufacturing a cartridge according to an embodiment, a cartridge having improved sealing and capable of generating an aerosol that is safe for users to inhale may be manufactured. In addition, according to the method of manufacturing a cartridge, the workability and cost effectiveness of the cartridge may be improved.

Effects of one or more embodiments are not limited to the description above and include all effects that may be inferred from the configurations below.

### Brief Description of Drawings

FIG. 1 is a flowchart of a method of manufacturing a cartridge, according to an embodiment.
FIG. 2 illustrates an example of a cartridge manufactured according to a method of manufacturing a cartridge, according to an embodiment.
FIG. 3 is a cross-sectional view taken along an x-z plane of the cartridge of FIG. 2.
FIG. 4 is an exploded view illustrating a storage and a cover of the cartridge of FIG. 2.
FIGS. 5 and 6 illustrate examples in which an aerosol generating article is inserted into an aerosol generating device including a cartridge, according to another embodiment.
FIGS. 7 and 8 illustrate examples of an aerosol generating article.
FIG. 9 is a block diagram of an aerosol generating device according to another embodiment.

### Best Mode for Carrying out the Invention

A method of manufacturing a cartridge includes plasma-treating at least a portion of a region of a storage, applying an adhesive to the plasma-treated region, and sealing the storage by coupling the cover to the region to which the adhesive is applied.

The storage or the cover may include one or more plastics selected from the group consisting of polyethylene, polypropylene, polyethylene terephthalate, polyamide, polyvinyl chloride, polystyrene, polycarbonate, polyvinylidene chloride, polyetherimide, polyurethane, and polyetheretherketone.

In the plasma-treating, the region of the storage may be exposed to plasma for 0.1 seconds to 10 seconds.

In the plasma-treating, a transferred type plasma torch may be moved with respect to the region of the storage at a speed of 0.1 cm/sec to 50 cm/sec.

The applying of the adhesive may be performed within two hours after the plasma-treating is terminated.

The adhesive may include an ultraviolet ray (UV) adhesive.

The method may further include injecting an aerosol generating material into the storage that is plasma-treated.

The storage may include a storage space in which the aerosol generating material is accommodated, and the injecting of the aerosol generating material may include injecting the aerosol generating material having a volume ranging from 70 % to 95 % of a volume of the storage space.

A cartridge according to another embodiment is manufactured according to a method of manufacturing a cartridge according to an embodiment.

An aerosol generating device according to another embodiment includes the above cartridge according to another embodiment.

### Mode for the Invention

With respect to the terms used to describe in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, a term which is not commonly used can be selected. In such a case, the meaning of the term will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

As used herein, expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

It will be understood that although the terms "first," "second," etc. may be used herein to describe various components, these components should not be limited by these terms. These components are only used to distinguish one component from another.

Throughout the specification, the term "aerosol generating device" may refer to a device for generating an aerosol by using an aerosol generating material to generate an aerosol that is inhalable directly through the user's mouth into the user's lungs.

Throughout the specification, the term "cigarette" refers to a product used for smoking. For example, the cigarette may be a combustive cigarette that may be ignited and combusted, or a heating-type cigarette that is heated by an aerosol generating device.

Hereinafter, the present disclosure will now be described more fully with reference to the accompanying drawings, in which exemplary embodiments of the present disclosure are shown such that one of ordinary skill in the art may easily work the present disclosure. The disclosure may, however, be embodied in many different forms and should not be construed as being limited to the embodiments set forth herein.

Hereinafter, embodiments of the present disclosure will be described in detail with reference to the drawings.

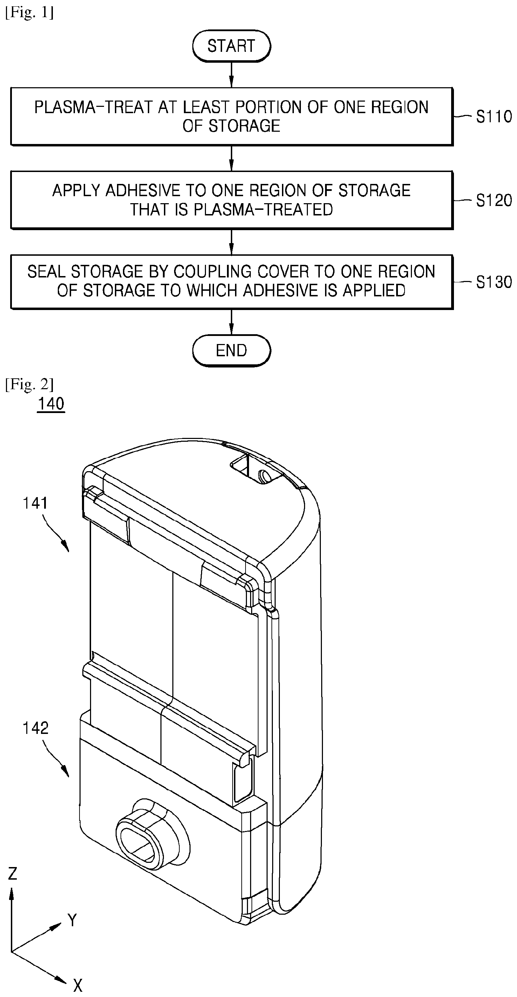

FIG. 1 is a flowchart of a method of manufacturing a cartridge, according to an embodiment.

Referring to FIG. 1, the method of manufacturing a cartridge includes operation S110 of plasma-treating at least a portion of one region of a storage, operation S120 of applying an adhesive to the region of the storage which is plasma-treated, and operation S130 of sealing the storage by coupling a cover to the region of the storage to which the adhesive is applied.

According to the method of manufacturing a cartridge, a cartridge including a storage, which accommodates an aerosol generating material, and a cover, which is coupled to one region of the storage and seals the storage, may be manufactured. The cartridge may generate an aerosol by heating the aerosol generating material.

Operation S110 of performing plasma treatment may be an operation of modifying a surface of at least a portion of the region of the storage by exposing the portion of the region of the storage to plasma. The plasma refers to a state in which electrons, ions, and neutral particles are mixed and is a fourth state of matter in addition to solid, liquid, and gas. Surface modification using plasma may ensure great adhesion between the storage and a cover to be coupled to the storage, thus preventing the leakage of the aerosol generating material.

Since the time taken for plasma treatment is relatively short, and the plasma treatment can be performed on a plurality of objects in a single process, the workability and cost effectiveness of the manufacture of the cartridge may be improved.

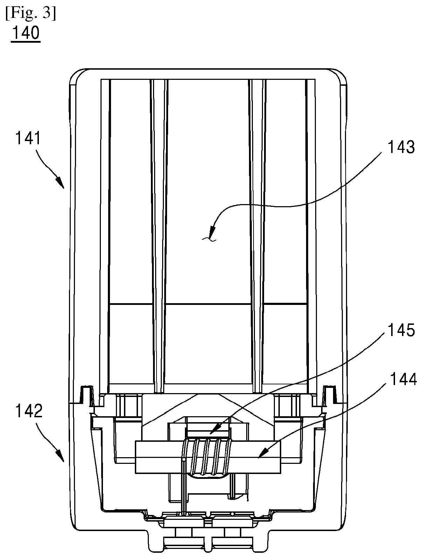

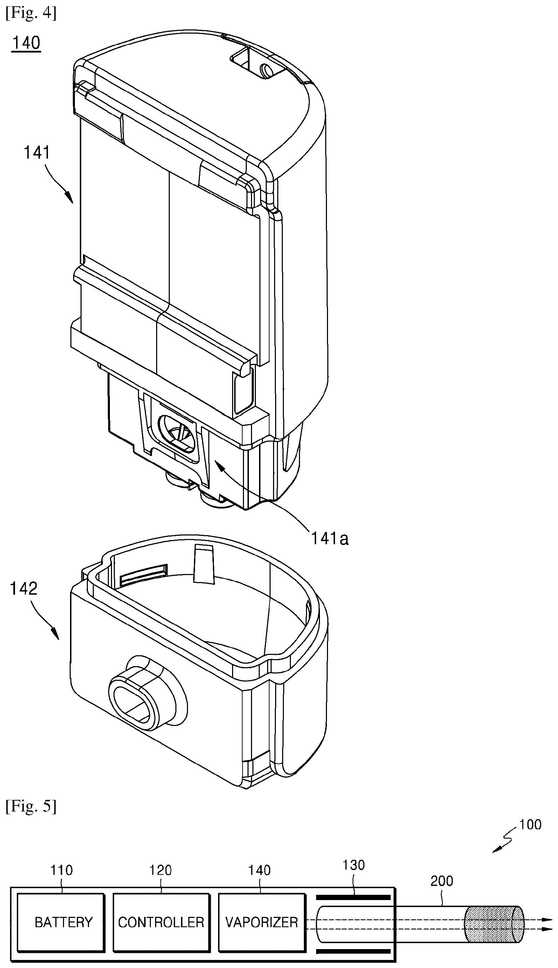

FIG. 2 illustrates an example of a cartridge manufactured according to the method of manufacturing a cartridge, according to an embodiment, and FIG. 3 is a cross-sectional view taken along an x-z plane of the cartridge of FIG. 2. Also, FIG. 4 is an exploded view illustrating the storage and the cover of the cartridge of FIG. 2.

Referring to FIGS. 2 to 4, a cartridge 140 includes a storage 141 and a cover 142. The cover 142 is coupled to a region 141a of the storage 141 and seals the storage 141.

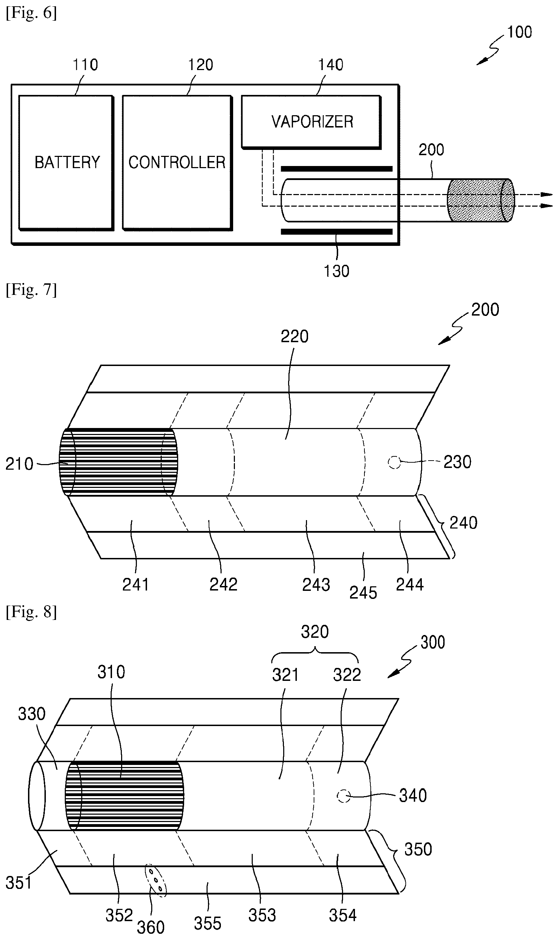

The storage 141 may include a storage space 143 for accommodating an aerosol generating material. In addition, a liquid delivery element 144 and a heating element 145 may be arranged in the storage space 143. The heating element 145 may generate an aerosol by heating an aerosol generating material absorbed by the liquid delivery element 144. Detailed components included in the cartridge 140 are described in detail with reference to FIGS. 5 and 6.

The storage 141 may have the region 141a to which the cover 142 is coupled. The cover 142 may be coupled to the storage 141 while surrounding the region 141a of the storage 141. The plasma treatment may be performed partially or entirely on the region 141a of the storage 141. A location at which the plasma treatment is performed is not limited thereto. For example, the plasma treatment may be performed on at least a portion of the surface of the cover 142.

The storage 141 or the cover 142 may include plastic. Plasma treatment on a surface including a polymer material, such as plastic, changes a chemical structure of the surface, and thus, physicochemical characteristics of the surface may only be changed while maintaining the basic physical properties of the polymer material. Accordingly, adhesion of the surface including the polymer material may be creased and impurity may be removed. Moreover, it is difficult to apply an adhesive to plastic materials with high chemical resistance, but when the chemical structure of the surface is changed through the surface plasma treatment, the adhesive may be easily applied.

When an adhesion method including heat staking or primer pretreatment is employed, there is a potential risk of generating materials that may be harmful to the human body. Accordingly, using such an adhesion method may not be appropriate to manufacture the cartridge 140 for generating an aerosol inhaled by a user. On the contrary, plasma treatment may be a suitable method for manufacturing the cartridge 140 in that there is no possibility of generating materials harmful to the human body.

The storage 141 or the cover 142 may include one or more plastics selected from the group consisting of polyethylene, polypropylene, polyethylene terephthalate, polyamide, polyvinyl chloride, polystyrene, polycarbonate, polyvinylidene chloride, polyetherimide, polyurethane, and polyetheretherketone. For example, the storage 141 or the cover 142 may be manufactured by molding polypropylene, but one or more embodiments are not limited thereto.

The cartridge 140 should have a transparent exterior so that the amount of aerosol generating materials inside the cartridge 140 may be checked from the outside. Also, the cartridge 140 should be heat resistant because the aerosol generating materials therein are heated. Also, because the cartridge 140 may be a disposable cartridge discarded when the aerosol generating material is exhausted, the cost effectiveness of the cartridge 140 is required. Therefore, appropriate plastic may be selected by considering the transparency of the exterior of the cartridge 140, cost effectiveness, etc. to form the storage 141 or the cover 142.

For example, the storage 141 or the cover 142 may include polypropylene. Polypropylene may have great chemical resistance to an aerosol generating material (e.g., polypropylene glycol, glycerin, etc.). Also, when compared to other engineering plastic materials, polypropylene may be easily injection-molded and thus is suitable for manufacturing the storage 141 or the cover 142.

The method of manufacturing a cartridge is described with reference to FIG. 1 again. Operation S110 of performing plasma treatment may be a process of exposing a region of the storage to plasma for about 0.1 seconds to about 10 seconds. When the plasma exposure time is longer than the above time range, surface modification may not be sufficiently performed, or the surface may be exceedingly damaged and thus the shape of the storage may be deformed. Operation S110 of performing plasma treatment may also be a process of exposing a region of the storage to plasma for about 0.5 seconds to about 5 seconds.

In addition, operation S110 of performing plasma treatment may be a process of moving a transferred type plasma torch with respect to the region of the storage at a speed of about 0.1 cm/sec to about 50 cm/sec. A plasma torch may spray plasma onto one region of the storage through a nozzle. Also, operation S110 of performing plasma treatment may be a process of moving the transferred type plasma torch with respect to the region of the storage at a speed of about 10 cm/sec to about 30 cm/sec. The plasma torch may be a plasma arc torch, but is not limited thereto.

The diameter of the nozzle of the transferred type plasma torch may be about 0.5 times to about 2 times the diameter of the cross-section of the storage in a direction crossing a direction in which the storage is coupled to the cover. Also, the plasma torch may spray the plasma in the direction in which the cover is coupled to one region of the storage. Operation S110 of performing plasma treatment may have improved workability and the time taken for the plasma treatment may be reduced when the above-described conditions about the diameter of the nozzle and the plasma spraying direction of the plasma torch are satisfied.

In operation S110 of performing plasma treatment, plasma may be generated through high-voltage discharge. The plasma power consumption may be from about 500 W to about 2000 W, and the plasma treatment operation frequency may be in a range from about 10 kHz to about 30 kHz.

Operation S120 of applying an adhesive to one region of the storage that is plasma-treated may be a process of applying a liquid adhesive to the surface of the region of the storage which is plasma-treated, but one or more embodiments are not limited thereto. For example, operation S120 of applying an adhesive may be a process of spraying a liquid adhesive onto the surface of the region of the storage which is plasma-treated.

Operation S120 of applying an adhesive may be performed within two hours after operation S110 of performing plasma treatment is terminated. The chemical structure of the surface, which has changed due to the plasma treatment, may revert to its original chemical structure after a certain period of time has passed. Therefore, applying an adhesive after a considerable amount of time has passed may reduce the desired effect of the plasma treatment, such as an increased adhesion. In an embodiment, operation S120 of applying an adhesive may be performed within about one hour after operation S110 of performing plasma treatment is terminated.

The adhesive may include an ultraviolet ray (UV) adhesive. The UV adhesive may be a liquid adhesive including a photoreactive initiator. Thus, when irradiated with ultraviolet rays, the photoreactive initiator starts to react, and thus the liquid adhesive may be hardened to a solid state in a relatively short time. Accordingly, if the adhesive includes a UV adhesive, the method of manufacturing a cartridge may further include irradiating ultraviolet rays onto the region of the storage to which the adhesive is applied, after operation S120 of applying the adhesive. However, types of adhesives are not limited thereto, and for example, the adhesive may include one or more adhesives selected from among the UV adhesive and a quick-dry adhesive.

Also, the method of manufacturing a cartridge may further include injecting an aerosol generating material into the plasma-treated storage. Since the chemical structure of the aerosol generating material may be changed when exposed to plasma, and the operation of injecting the aerosol generating material may be performed after operation S110 of performing plasma treatment.

The storage may include a storage space in which the aerosol generating material is accommodated, and the injecting of the aerosol generating material may be injecting an aerosol generating material having a volume ranging from about 70 % to about 95 % of the volume of the storage space. The surface of the region of the storage that is plasma-treated may have increased surface roughness, or its shape may be changed. Accordingly, a liquid aerosol generating material may be absorbed into the surface of the region of the storage or may leak. When the volume of the aerosol generating material injected into the storage space is adjusted to the above range, the absorption of the aerosol generating material to the surface of the region of the storage or the leakage of the aerosol generating material may be prevented. In an embodiment, the injecting of the aerosol generating material may be injecting an aerosol generating material having a volume ranging from about 85 % to about 95 % of the volume of the storage space.

### Embodiment 1: manufacture of cartridge through plasma treatment

A cartridge having the same shape as the cartridge of FIGS. 2 and 3 was manufactured. Polypropylene was used for the storage and the cover.

The surface of the region of the storage coupled to the cover was plasma-treated. A transferred type plasma torch was used for the plasma treatment and was moved with respect to the surface of the storage at a speed of 20 cm/sec for about 1 second. The plasma power consumption was 1000 W.

Glycerin was injected into the storage space of the plasma-treated storage as an aerosol generating material, and the volume of the injected glycerin was 90 % of the volume of the storage space.

The UV adhesive was applied to the surface of the region of the plasma-treated storage, and after the storage was coupled to the cover, ultraviolet rays was irradiated for about 12 seconds to manufacture the cartridge.

### Comparative Example 1: manufacture of cartridge through ultrasonic welding

As described in the Embodiment 1 above, the cartridge having the same shape as the cartridge of FIGS. 2 and 3 was manufactured. Polypropylene was used for the storage and the cover.

The UV adhesive was applied to the surface of the region of the storage coupled to the cover, and after the storage was coupled to the cover, the portion in which the storage was coupled to the cover was welded by ultrasonic waves, thus manufacturing the cartridge.

### Experimental Embodiment 1: Test for adhesion measurement

Adhesion of the storage and the cover of the cartridge manufactured according to the Embodiment 1 and the Comparative Example 1 was measured. The adhesion measurement was performed by measuring the size of the tensile force required to separate the storage from the cover 10 times by using a tensile force testing machine and then calculating the average.

The results showed that the cartridge of the Comparative Example 1 has a tensile force of about 1.2 kgf, while the cartridge of the Embodiment 1 has a tensile force of about 19.51 kgf. Accordingly, it was identified that the adhesion of the storage and the cover of the cartridge is increased through the plasma treatment.

Hereinafter, the cartridge manufactured according to the method of manufacturing a cartridge according to an embodiment and an aerosol generating device including the cartridge are described in detail with reference to the drawings.

FIGS. 5 and 6 are diagrams illustrating examples in which an aerosol generating article is inserted into an aerosol generating device.

Referring to FIGS. 5 and 6, the aerosol generating device 100 includes a battery 110, a controller 120, a heater 130, and a cartridge 140. Also, an aerosol generating article 200 may be inserted into an internal space of the aerosol generating device 100.

The aerosol generating device 100 of FIGS. 5 and 6 may include a cartridge, but one or more embodiments are not limited to such an implementation method of the aerosol generating device, and the aerosol generating device 100 may not include a cartridge. When the aerosol generating device 100 does not include a cartridge, the aerosol generating article 200 includes an aerosol generating material, and thus, when the aerosol generating article 200 is heated by the heater 130, the aerosol generating article 200 may generate an aerosol.

FIGS. 5 and 6 illustrate the aerosol generating device 100 includes the components related to the present embodiment. Therefore, it will be understood by one of ordinary skill in the art related to the present embodiment that other general-purpose components may be further included in the aerosol generating device 100, in addition to the components illustrated in FIGS. 5 and 6.

Also, FIGS. 5 and 6 illustrate that the heater 130 is included in the aerosol generating device 100, but according to necessity, the heater 130 may be omitted.

FIG. 5 illustrates that the battery 110, the controller 120, the cartridge 140, and the heater 130 are arranged in series. Also, FIG. 6 illustrates that the cartridge 140 and the heater 130 are arranged in parallel. However, the internal structure of the aerosol generating device 100 is not limited to the structures illustrated in FIG. 5 or 6. In other words, according to the design of the aerosol generating device 100, the battery 110, the controller 120, the cartridge 140, and the heater 130 may be differently arranged.

When the aerosol generating article 200 is inserted into the aerosol generating device 100, the aerosol generating device 100 may operate the cartridge 140 to generate an aerosol from the cartridge 140. The aerosol generated from the cartridge 140 is delivered to the user by passing through the aerosol generating article 200. The cartridge 140 is described below in more detail.

The battery 110 supplies power to be used for the aerosol generating device 100 to operate. For example, the battery 110 may supply power to heat the heater 130 or the cartridge 140, and may supply power for operating the controller 120. Also, the battery 110 may supply power for operations of a display, a sensor, a motor, etc. mounted in the aerosol generating device 100.

The controller 120 generally controls operations of the aerosol generating device 100. In detail, the controller 120 may control not only operations of the battery 110, the heater 130, and the cartridge 140, but also operations of other components included in the aerosol generating device 100. Also, the controller 120 may check a state of each of the components of the aerosol generating device 100 to determine whether or not the aerosol generating device 100 is able to operate.

The controller 120 may include at least one processor. The processor may be implemented as an array of a plurality of logic gates or may be implemented as a combination of a general-purpose microprocessor and a memory in which a program executable by the microprocessor is stored. It will be understood by one of ordinary skill in the art that the processor can be implemented in other forms of hardware.

The heater 130 may be heated by the power supplied from the battery 110. For example, when the aerosol generating article 200 is inserted into the aerosol generating device 100, the heater 130 may be located outside the aerosol generating article 200. Thus, the heated heater 130 may increase a temperature of an aerosol generating material in the aerosol generating article 200.

The heater 130 may include an electro-resistive heater. For example, the heater 130 may include an electrically conductive track, and the heater 130 may be heated when currents flow through the electrically conductive track. However, the heater 130 is not limited to the example described above and may include all heaters which may be heated to a desired temperature. Here, the desired temperature may be pre-set in the aerosol generating device 100 or may be set as a temperature desired by a user.

As another example, the heater 130 may include an induction heater. In detail, the heater 130 may include an electrically conductive coil for heating an aerosol generating article in an induction heating method, and the aerosol generating article may include a susceptor that may be heated by the induction heater.

FIGS. 5 and 6 illustrate that the heater 130 is located outside the aerosol generating article 200, but one or more embodiments are not limited thereto. For example, the heater 130 may include a tube-type heating element, a plate-type heating element, a needle-type heating element, or a rod-type heating element, and may heat the inside or outside of the aerosol generating article 200, according to the shape of the heating element.

Also, the aerosol generating device 100 may include a plurality of heaters 130. In this case, the heaters 130 may be arranged to be inserted into the aerosol generating article 200 and may be located outside the aerosol generating article 200. In addition, some of the heaters 130 may be arranged to be inserted into the aerosol generating article 200, and the others may be located outside the aerosol generating article 200. In addition, the shape of the heater 130 is not limited to the shapes illustrated in FIGS. 5 and 6 and may include various shapes.

The cartridge 140 may generate an aerosol by heating an aerosol generating material, and the generated aerosol may pass through the aerosol generating article 200 to be delivered to a user. In other words, the aerosol generated via the cartridge 140 may move along an air flow passage of the aerosol generating device 100, and the air flow passage may be configured such that the aerosol generated via the cartridge 140 may pass through the aerosol generating article 200 to be delivered to the user.

For example, the cartridge 140 may include a storage, a liquid delivery element, and a heating element, but it is not limited thereto. For example, the storage, the liquid delivery element, and the heating element may be included in the aerosol generating device 100 as independent modules.

The storage may store an aerosol generating material. For example, the aerosol generating material may be a liquid including a tobacco-containing material having a volatile tobacco flavor component, or a liquid including a non-tobacco material. The storage may be formed to be detachable from the cartridge 140 or may be formed integrally with the cartridge 140.

For example, the aerosol generating material may include water, a solvent, ethanol, plant extract, spices, flavorings, or a vitamin mixture. The spices may include menthol, peppermint, spearmint oil, and various fruit-flavored ingredients, but are not limited thereto. The flavorings may include ingredients capable of providing various flavors or tastes to a user. Vitamin mixtures may be a mixture of at least one of vitamin A, vitamin B, vitamin C, and vitamin E, but are not limited thereto. Also, the aerosol generating material may include an aerosol forming substance, such as glycerin and propylene glycol.

The liquid delivery element may deliver the aerosol generating material in the storage to the heating element. For example, the liquid delivery element may be a wick such as cotton fiber, ceramic fiber, glass fiber, or porous ceramic, but is not limited thereto.

The heating element is an element for heating the aerosol generating material delivered by the liquid delivery element. For example, the heating element may be a metal heating wire, a metal hot plate, a ceramic heater, or the like, but is not limited thereto. In addition, the heating element may include a conductive filament such as nichrome wire and may be positioned as being wound around the liquid delivery element. The heating element may be heated by a current supply and may transfer heat to the liquid composition in contact with the heating element, thereby heating the liquid composition. As a result, an aerosol may be generated.

For example, the cartridge 140 may be referred to as a cartomizer or an atomizer, but it is not limited thereto.

The aerosol generating device 100 may further include general-purpose components in addition to the battery 110, the controller 120, the heater 130, and the cartridge 140. For example, the aerosol generating device 100 may include a display capable of outputting visual information and/or a motor for outputting haptic information. Also, the aerosol generating device 100 may include at least one sensor (a puff sensor, a temperature sensor, an aerosol generating article insertion detecting sensor, etc.). Also, the aerosol generating device 100 may be formed as a structure that, even when the aerosol generating article 200 is inserted into the aerosol generating device 100, may introduce external air or discharge internal air.

Although not illustrated in FIGS. 5 and 6, the aerosol generating device 100 and an additional cradle may form together a system. For example, the cradle may be used to charge the battery 110 of the aerosol generating device 100. Alternatively, the heater 130 may be heated when the cradle and the aerosol generating device 100 are coupled to each other.

The aerosol generating article 200 may be similar to a general combustive cigarette. For example, the aerosol generating article 200 may be divided into a first portion including an aerosol generating material and a second portion including a filter, etc. Alternatively, the second portion of the aerosol generating article 200 may also include an aerosol generating material. For example, an aerosol generating material made in the form of granules or capsules may be inserted into the second portion.

The entire first portion may be inserted into the aerosol generating device 100, and the second portion may be exposed to the outside. Alternatively, only a portion of the first portion may be inserted into the aerosol generating device 100, or a portion of the first portion and a portion of the second portion may be inserted into the aerosol generating device 100. The user may inhale an aerosol while holding the second portion by the mouth of the user. In this case, the aerosol is generated by the external air passing through the first portion, and the generated aerosol passes through the second portion and is delivered to the user's mouth.

For example, the external air may be introduced through at least one air passage formed in the aerosol generating device 100. For example, the opening and closing of the air passage and/or the size of the air passage formed in the aerosol generating device 100 may be adjusted by the user. Accordingly, the amount and the quality of smoking may be adjusted by the user. As another example, the external air may be introduced to the aerosol generating article 200 through at least one hole formed in the surface of the aerosol generating article 200.

Hereinafter, examples of the aerosol generating article 200 are described with reference to FIGS. 7 and 8.

FIGS. 7 and 8 illustrate examples of an aerosol generating article.

Referring to FIG. 7, the aerosol generating article 200 may include a tobacco rod 210 and a filter rod 220. The first portion described above with reference to FIGS. 5 and 6 includes the tobacco rod 210, and the second portion includes the filter rod 220.

FIG. 7 illustrates that the filter rod 220 includes a single segment. However, the filter rod 220 is not limited thereto. In other words, the filter rod 220 may include a plurality of segments. For example, the filter rod 220 may include a first segment configured to cool an aerosol and a second segment configured to filter a certain component included in the aerosol. Also, as necessary, the filter rod 220 may further include at least one segment configured to perform other functions.

The aerosol generating article 200 may be packaged via at least one wrapper 240. The wrapper 240 may have at least one hole through which external air may be introduced or internal air may be discharged. For example, the aerosol generating article 200 may be packaged via one wrapper 240. As another example, the aerosol generating article 200 may be doubly packaged via at least two wrappers 240. For example, the tobacco rod 210 may be packaged by a first wrapper 241, and the filter rod 220 may be packaged by wrappers 242, 243, and 244. In addition, the entire aerosol generating article 200 may be repackaged via a single wrapper 245. When the filter rod 220 is composed of a plurality of segments, each segment may be packaged by separate wrappers 242, 243, and 244.

The tobacco rod 210 may include an aerosol generating material. For example, the aerosol generating material may include at least one of glycerin, propylene glycol, ethylene glycol, dipropylene glycol, diethylene glycol, triethylene glycol, tetraethylene glycol, and oleyl alcohol, but it is not limited thereto. Also, the tobacco rod 210 may include other additives, such as flavors, a wetting agent, and/or organic acid. Also, the tobacco rod 210 may include a flavored liquid, such as menthol or a moisturizer, which is injected into the tobacco rod 210.

The tobacco rod 210 may be manufactured in various forms. For example, the tobacco rod 210 may be formed as a sheet or a strand. Also, the tobacco rod 210 may be formed as a pipe tobacco, which is formed of tiny bits cut from a tobacco sheet. Also, the tobacco rod 210 may be surrounded by a heat conductive material. For example, the heat conductive material may be, but is not limited to, metal foil such as aluminum foil. For example, the heat conductive material surrounding the tobacco rod 210 may uniformly distribute heat transmitted to the tobacco rod 210, and thus, the heat conductivity applied to the tobacco rod 210 may be increased and the taste of the tobacco may be improved. Also, the heat conductive material surrounding the tobacco rod 210 may function as a susceptor heated by the induction heater. Here, although not illustrated in the drawings, the tobacco rod 210 may further include an additional susceptor, in addition to the heat conductive material surrounding the tobacco rod 210.

The filter rod 220 may include a cellulose acetate filter. Shapes of the filter rod 220 are not limited. For example, the filter rod 220 may include a cylinder-type rod or a tube-type rod having a hollow inside. Also, the filter rod 220 may include a recess-type rod. When the filter rod 220 includes a plurality of segments, at least one of the plurality of segments may have a different shape.

The filter rod 220 may generate flavors. For example, a flavored liquid may be injected into the filter rod 220, or an additional fiber coated with the flavored liquid may be inserted into the filter rod 220.

Also, the filter rod 220 may include at least one capsule 230. Here, the capsule 230 may generate a flavor or an aerosol. For example, the capsule 230 may have a configuration in which a liquid containing a flavoring material is wrapped with a film. For example, the capsule 230 may have a spherical or cylindrical shape, but is not limited thereto.

When the filter rod 220 includes a segment configured to cool the aerosol, the cooling segment may include a polymer material or a biodegradable polymer material. For example, the cooling segment may include pure polylactic acid alone, but the material for forming the cooling segment is not limited thereto. Alternatively, the cooling segment may include a cellulose acetate filter including therein a plurality of holes. However, the cooling segment is not limited thereto, and any material having an aerosol cooling function may be used.

Referring to FIG. 8, an aerosol generating article 300 may further include a front-end plug 330. The front-end plug 330 may be located on one side of a tobacco rod 310 which is opposite to a filter rod 320. The front-end plug 330 may prevent the tobacco rod 310 from being detached outwards and prevent the liquefied aerosol from flowing from the tobacco rod 310 into the aerosol generating device(100 of FIGS. 5 and 6), during smoking.

The filter rod 320 may include a first segment 321 and a second segment 322. Here, the first segment 321 may correspond to a first segment of the filter rod 220 of FIG. 7, and the second segment 322 may correspond to a third segment of the filter rod 220 of FIG. 7.

The diameter and the total length of the aerosol generating article 300 may correspond to the diameter and the total length of the aerosol generating article 200 of FIG. 7. For example, the length of the front-end plug 330 may be about 7 mm, the length of the tobacco rod 310 may be about 15 mm, the length of the first segment 321 may be about 12 mm, and the length of the second segment 322 may be about 14 mm, but the lengths are not limited thereto.

The aerosol generating article 300 may be packaged via at least one wrapper 350. The wrapper 350 may have at least one hole through which external air may be introduced or internal air may be discharged. For example, the front-end plug 330 may be packaged via a first wrapper 351, the filter rod 310 may be packaged via a second wrapper 352, the first segment 321 may be packaged via a third wrapper 353, and the second segment 322 may be packaged via a fourth wrapper 354.

In addition, the entire aerosol generating article 300 may be repackaged via a fifth wrapper 355. Also, the fifth wrapper 355 may have at least one hole 360. For example, the hole 360 may be formed in an area surrounding the tobacco rod 310, but is not limited thereto. The hole 360 may serve to transfer heat formed by the heater 130 illustrated in FIGS. 6 and 7 to the inside of the tobacco rod 31.

Also, the second segment 322 may include at least one capsule 340. Here, the capsule 340 may generate a flavor or an aerosol. For example, the capsule 340 may have a configuration in which a liquid containing a flavoring material is wrapped with a film. The capsule 340 may have a spherical or cylindrical shape, but is not limited thereto.

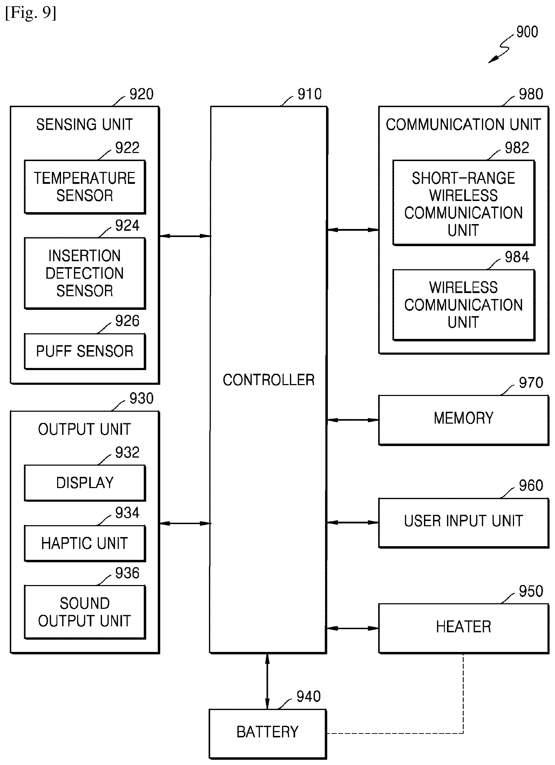

FIG. 9 is a block diagram of an aerosol generating device 900 according to another embodiment.

The aerosol generating device 900 may include a controller 910, a sensing unit 920, an output unit 930, a battery 940, a heater 950, a user input unit 960, a memory 970, and a communication unit 980. However, the internal structure of the aerosol generating device 900 is not limited to those illustrated in FIG. 9. That is, according to the design of the aerosol generating device 900, it will be understood by one of ordinary skill in the art that some of the components shown in FIG. 9 may be omitted or new components may be added.

The sensing unit 920 may sense a state of the aerosol generating device 900 and a state around the aerosol generating device 900, and transmit sensed information to the controller 910. Based on the sensed information, the controller 910 may control the aerosol generating device 900 to perform various functions, such as controlling an operation of the heater 950, limiting smoking, determining whether an aerosol generating article (e.g., a cigarette, a cartridge, or the like) is inserted, displaying a notification, or the like.

The sensing unit 920 may include at least one of a temperature sensor 922, an insertion detection sensor 924, and a puff sensor 926, but is not limited thereto.

The temperature sensor 922 may sense a temperature at which the heater 950 (or an aerosol generating material) is heated. The aerosol generating device 900 may include a separate temperature sensor for sensing the temperature of the heater 950, or the heater 950 may serve as a temperature sensor. Alternatively, the temperature sensor 922 may also be arranged around the battery 940 to monitor the temperature of the battery 940.

The insertion detection sensor 924 may sense insertion and/or removal of an aerosol generating article. For example, the insertion detection sensor 924 may include at least one of a film sensor, a pressure sensor, an optical sensor, a resistive sensor, a capacitive sensor, an inductive sensor, and an infrared sensor, and may sense a signal change according to the insertion and/or removal of the aerosol generating article.

The puff sensor 926 may sense a user's puff on the basis of various physical changes in an airflow passage or an airflow channel. For example, the puff sensor 926 may sense a user's puff on the basis of any one of a temperature change, a flow change, a voltage change, and a pressure change.

The sensing unit 920 may further include, in addition to the aforementioned sensors 922 to 926, at least one of a temperature/humidity sensor, a barometric pressure sensor, a magnetic sensor, an acceleration sensor, a gyroscope sensor, a location sensor (e.g., a global positioning system (GPS)), a proximity sensor, and a red-green-blue (RGB) sensor (illuminance sensor). Because a function of each of sensors may be intuitively inferred by one of ordinary skill in the art from the name of the sensor, a detailed description thereof may be omitted.

The output unit 930 may output information on a state of the aerosol generating device 900 and provide the information to the user. The output unit 930 may include at least one of a display unit 932, a haptic unit 934, and a sound output unit 936, but is not limited thereto. When the display unit 932 and a touch pad form a layered structure to form a touch screen, the display unit 932 may also be used as an input device in addition to an output device.

The display unit 932 may visually provide information about the aerosol generating device 900 to the user. For example, information about the aerosol generating device 900 may mean various pieces of information, such as a charging/discharging state of the battery 940 of the aerosol generating device 900, a preheating state of the heater 950, an insertion/removal state of an aerosol generating article, or a state in which the use of the aerosol generating device 900 is restricted (e.g., sensing of an abnormal object), or the like, and the display unit 932 may output the information to the outside. The display unit 932 may be, for example, a liquid crystal display panel (LCD), an organic light-emitting diode (OLED) display panel, or the like. In addition, the display unit 932 may be in the form of a light-emitting diode (LED) light-emitting device.

The haptic unit 934 may tactilely provide information about the aerosol generating device 900 to the user by converting an electrical signal into a mechanical stimulus or an electrical stimulus. For example, the haptic unit 934 may include a motor, a piezoelectric element, or an electrical stimulation device.

The sound output unit 936 may audibly provide information about the aerosol generating device 900 to the user. For example, the sound output unit 936 may convert an electrical signal into a sound signal and output the same to the outside.

The battery 940 may supply power used to operate the aerosol generating device 900. The battery 940 may supply power such that the heater 950 may be heated. In addition, the battery 940 may supply power required for operations of other components (e.g., the sensing unit 920, the output unit 930, the user input unit 960, the memory 970, and the communication unit 980) in the aerosol generating device 900. The battery 940 may be a rechargeable battery or a disposable battery. For example, the battery 940 may be a lithium polymer (LiPoly) battery, but is not limited thereto.

The heater 950 may receive power from the battery 940 to heat an aerosol generating material. Although not illustrated in FIG. 9, the aerosol generating device 900 may further include a power conversion circuit (e.g., a direct current (DC)/DC converter) that converts power of the battery 940 and supplies the same to the heater 950. In addition, when the aerosol generating device 900 generates aerosols in an induction heating method, the aerosol generating device 900 may further include a DC/alternating current (AC) converter that converts DC power of the battery 940 into AC power.

The controller 910, the sensing unit 920, the output unit 930, the user input unit 960, the memory 970, and the communication unit 980 may each receive power from the battery 940 to perform a function. Although not illustrated in FIG. 9, the aerosol generating device 900 may further include a power conversion circuit that converts power of the battery 940 to supply the power to respective components, for example, a low dropout (LDO) circuit, or a voltage regulator circuit.

In an embodiment, the heater 950 may be formed of any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, nichrome, or the like, but is not limited thereto. In addition, the heater 950 may be implemented by a metal wire, a metal plate on which an electrically conductive track is arranged, a ceramic heating element, or the like, but is not limited thereto.

In another embodiment, the heater 950 may be a heater of an induction heating type. For example, the heater 950 may include a susceptor that heats an aerosol generating material by generating heat through a magnetic field applied by a coil.

The user input unit 960 may receive information input from the user or may output information to the user. For example, the user input unit 960 may include a key pad, a dome switch, a touch pad (a contact capacitive method, a pressure resistance film method, an infrared sensing method, a surface ultrasonic conduction method, an integral tension measurement method, a piezo effect method, or the like), a jog wheel, a jog switch, or the like, but is not limited thereto. In addition, although not illustrated in FIG. 9, the aerosol generating device 900 may further include a connection interface, such as a universal serial bus (USB) interface, and may connect to other external devices through the connection interface, such as the USB interface, to transmit and receive information, or to charge the battery 940.

The memory 970 is a hardware component that stores various types of data processed in the aerosol generating device 900, and may store data processed and data to be processed by the controller 910. The memory 970 may include at least one type of storage medium from among a flash memory type, a hard disk type, a multimedia card micro type memory, a card-type memory (for example, secure digital (SD) or extreme digital (XD) memory, etc.), random access memory (RAM), static random access memory (SRAM), read-only memory (ROM), electrically erasable programmable read-only memory (EEPROM), programmable read-only memory (PROM), a magnetic memory, a magnetic disk, and an optical disk. The memory 970 may store an operation time of the aerosol generating device 900, the maximum number of puffs, the current number of puffs, at least one temperature profile, data on a user's smoking pattern, etc.

The communication unit 980 may include at least one component for communication with another electronic device. For example, the communication unit 980 may include a short-range wireless communication unit 982 and a wireless communication unit 984.

The short-range wireless communication unit 982 may include a Bluetooth communication unit, a Bluetooth Low Energy (BLE) communication unit, a near field communication unit, a wireless LAN (WLAN) (Wi-Fi) communication unit, a Zigbee communication unit, an infrared data association (IrDA) communication unit, a Wi-Fi Direct (WFD) communication unit, an ultra-wideband (UWB) communication unit, an Ant+ communication unit, or the like, but is not limited thereto.

The wireless communication unit 984 may include a cellular network communication unit, an Internet communication unit, a computer network (e.g., local area network (LAN) or wide area network (WAN)) communication unit, or the like, but is not limited thereto. The wireless communication unit 984 may also identify and authenticate the aerosol generating device 900 within a communication network by using subscriber information (e.g., International Mobile Subscriber Identifier (IMSI)).

The controller 910 may control general operations of the aerosol generating device 900. In an embodiment, the controller 910 may include at least one processor. The processor may be implemented as an array of a plurality of logic gates or may be implemented as a combination of a general-purpose microprocessor and a memory in which a program executable by the microprocessor is stored. It will be understood by one of ordinary skill in the art that the processor may be implemented in other forms of hardware.

The controller 910 may control the temperature of the heater 950 by controlling the supply of power of the battery 940 to the heater 950. For example, the controller 910 may control power supply by controlling the switching of a switching element between the battery 940 and the heater 950. In another example, a direct heating circuit may also control power supply to the heater 950 according to a control command of the controller 910.

The controller 910 may analyze a result sensed by the sensing unit 920 and control subsequent processes to be performed. For example, the controller 910 may control power supplied to the heater 950 to start or end an operation of the heater 950 on the basis of the result sensed by the sensing unit 920. As another example, the controller 910 may control, based on the result sensed by the sensing unit 920, an amount of power supplied to the heater 950 and the time the power is supplied, such that the heater 950 may be heated to a certain temperature or maintained at an appropriate temperature.

The controller 910 may control the output unit 930 on the basis of the result sensed by the sensing unit 920. For example, when the number of puffs counted through the puff sensor 926 reaches a preset number, the controller 910 may notify the user that the aerosol generating device 900 will soon be terminated through at least one of the display unit 932, the haptic unit 934, and the sound output unit 936.

One embodiment may also be implemented in the form of a recording medium including instructions executable by a computer, such as a program module executable by the computer. The computer-readable recording medium may be any available medium that can be accessed by a computer, including both volatile and nonvolatile media, and both removable and non-removable media. In addition, the computer-readable recording medium may include both a computer storage medium and a communication medium. The computer storage medium includes all of volatile and nonvolatile media, and removable and non-removable media implemented by any method or technology for storage of information such as computer-readable instructions, data structures, program modules, or other data. The communication medium typically includes computer-readable instructions, data structures, other data in modulated data signals such as program modules, or other transmission mechanisms, and includes any information transfer media.

The descriptions of the above-described embodiments are merely examples, and it will be understood by one of ordinary skill in the art that various changes and equivalents thereof may be made. Therefore, the scope of the disclosure should be defined by the appended claims, and all differences within the scope equivalent to those described in the claims will be construed as being included in the scope of protection defined by the claims.

## Claims

1. A method of manufacturing a cartridge (140) configured to generate an aerosol by heating an aerosol generating material, the cartridge (140) comprising a storage (141) including a storage space (143) for accommodating the aerosol generating material and a cover (142) coupled to a region (141a) of the storage (141), wherein a liquid delivery element (144) and a heating element (145) are arranged in the storage space (143), the method comprising:
plasma-treating (S110) at least a portion of the region (141a) of the storage (141);
applying (S120) an adhesive to the region (141a) of the storage (141) which is plasma-treated; and
sealing (S130) the storage (141) by coupling the cover (142) to the region (141a) of the storage (141) to which the adhesive is applied.

2. The method of claim 1, wherein the storage (141) or the cover (142) comprises one or more plastics selected from the group consisting of polyethylene, polypropylene, polyethylene terephthalate, polyamide, polyvinyl chloride, polystyrene, polycarbonate, polyvinylidene chloride, polyetherimide, polyurethane, and polyetheretherketone.

3. The method of claim 1, wherein, in the plasma-treating the region (141a) of the storage (141) is exposed to plasma for 0.1 seconds to 10 seconds.

4. The method of claim 1, wherein, in the plasma-treating a transferred type plasma torch is moved with respect to the region (141a) of the storage (141) at a speed of 0.1 cm/sec to 50 cm/sec.

5. The method of claim 1, wherein the applying of the adhesive is performed within two hours after the plasma-treating is terminated.

6. The method of claim 1, wherein the adhesive comprises an ultraviolet ray (UV) adhesive.

7. The method of claim 1, further comprising injecting an aerosol generating material into the storage (141) that is plasma-treated.

8. The method of claim 7, wherein the injecting of the aerosol generating material comprises injecting the aerosol generating material having a volume ranging from 70 % to 95 % of a volume of the storage space (143).

## Patentansprüche

1. Verfahren zum Herstellen einer Kartusche (140), die konfiguriert ist, durch Erhitzen eines aerosolerzeugenden Materials ein Aerosol zu erzeugen, wobei die Kartusche (140) einen Speicher (141), der einen Speicherraum (143) zum Aufnehmen des aerosolerzeugenden Materials enthält, und eine Abdeckung (142), die mit einem Bereich (141a) des Speichers (141) gekoppelt ist, umfasst, wobei ein Flüssigkeitsabgabeelement (144) und ein Heizelement (145) im Speicherraum (143) angeordnet sind, wobei das Verfahren Folgendes umfasst:
Plasmabehandeln (S110) zumindest eines Abschnitts des Bereichs (114a) des Speichers (141);
Aufbringen (S120) eines Haftmittels auf den Bereich (141a) des Speichers (141), der plasmabehandelt ist; und
Versiegeln (S130) des Speichers (141) durch Koppeln der Abdeckung (142) mit dem Bereich (141a) des Speichers (141), auf den das Haftmittel aufgebracht ist.

2. Verfahren nach Anspruch 1, wobei der Speicher (141) oder die Abdeckung (142) einen oder mehrere Kunststoffe umfasst, die aus der Gruppe ausgewählt sind, die aus Polyethylen, Polypropylen, Polyethylenterephthalat, Polyamid, Polyvinylchlorid, Polystyrol, Polycarbonat, Polyvinylidenchlorid, Polyetherimid, Polyurethan und Polyetheretherketon besteht.

3. Verfahren nach Anspruch 1, wobei der Bereich (141a) des Speichers (141) in der Plasmabehandlung dem Plasma für 0,1 Sekunde bis 10 Sekunden ausgesetzt wird.

4. Verfahren nach Anspruch 1, wobei in der Plasmabehandlung ein Plasmabrenner mit übertragenem Lichtbogen mit einer Geschwindigkeit im Bereich von 0,1 cm/s bis 50 cm/s in Bezug auf den Bereich (141a) des Speichers (141) bewegt wird.

5. Verfahren nach Anspruch 1, wobei das Aufbringen des Haftmittels innerhalb von zwei Stunden, nachdem die Plasmabehandlung beendet worden ist, durchgeführt wird.

6. Verfahren nach Anspruch 1, wobei das Haftmittel ein Haftmittel mittels ultravioletter Strahlung (UV-Haftmittel) umfasst.

7. Verfahren nach Anspruch 1, das ferner das Einspritzen eines aerosolerzeugenden Materials in den Speicher (141), der plasmabehandelt ist, umfasst.

8. Verfahren nach Anspruch 7, wobei das Einspritzen des aerosolerzeugenden Materials das Einspritzen des aerosolerzeugenden Materials mit einem Volumen im Bereich von 70 % bis 95 % eines Volumens des Speicherraums (143) umfasst.

## Revendications

1. Procédé de fabrication d'une cartouche (140) configurée pour produire un aérosol en chauffant une matière de production d'aérosol, la cartouche (140) comportant un réservoir de stockage (141) incluant un espace de stockage (143) pour recevoir la matière de production d'aérosol et un couvercle (142) couplé à une zone (141a) du réservoir de stockage (141), dans lequel un élément de distribution de liquide (144) et un élément chauffant (145) sont disposés dans l'espace de stockage (143), le procédé comportant de :
traiter au plasma (S110) au moins une partie de la zone (141a) du réservoir de stockage (141) ;
appliquer (S120) un adhésif sur la zone (141a) du réservoir de stockage (141) qui est traitée au plasma ; et
rendre (S130) le réservoir de stockage (141) étanche en couplant le couvercle (142) à la zone (141a) du réservoir de stockage (141) sur laquelle l'adhésif est appliqué.

2. Procédé selon la revendication 1, dans lequel le réservoir de stockage (141) ou le couvercle (142) comporte une ou plusieurs matières plastiques choisies parmi le groupe constitué de polyéthylène, polypropylène, polyéthylène téréphtalate, polyamide, polychlorure de vinyle, polystyrène, polycarbonate, polychlorure de vinylidène, polyétherimide, polyuréthane et polyétheréthercétone.

3. Procédé selon la revendication 1, dans lequel, lors du traitement au plasma, la zone (141a) du réservoir de stockage (141) est exposée au plasma pendant 0,1 seconde à 10 secondes.

4. Procédé selon la revendication 1, dans lequel, lors du traitement au plasma, une torche à plasma de type transféré est déplacée par rapport à la zone (141a) du réservoir de stockage (141) à une vitesse de 0,1 cm/s à 50 cm/s.

5. Procédé selon la revendication 1, dans lequel l'application de l'adhésif est réalisée dans les deux heures après la fin du traitement au plasma.

6. Procédé selon la revendication 1, dans lequel l'adhésif comporte un adhésif durcissant aux rayons ultraviolets (UV).

7. Procédé selon la revendication 1, comportant en outre d'injecter une matière de production d'aérosol dans le réservoir de stockage (141) qui est traité au plasma.

8. Procédé selon la revendication 7, dans lequel l'injection de la matière de production d'aérosol comporte d'injecter la matière de production d'aérosol ayant un volume variant de 70 % à 95 % d'un volume de l'espace de stockage (143).
